# FASCICULE DE BREVET EUROPEEN

(11) **EP 3 606 775 B1**
(45) Date de publication et mention de la délivrance du brevet: **05.05.2021**
(21) Numéro de dépôt: 18722671.7
(22) Date de dépôt: 30.03.2018
(51) Int. Cl.: B60H 1/00, B60H 1/32

(54) **INSTALLATION DE VENTILATION, CHAUFFAGE ET/OU CLIMATISATION COMPRENANT UNE ARRIVEE D'AIR ADDITIONNELLE**
LÜFTUNGS-, HEIZ- ODER KLIMAANLAGE MIT ZUSÄTZLICHEM LUFTEINLASS
VENTILATION, HEATING AND/OR AIR-CONDITIONING INSTALLATION COMPRISING AN ADDITIONAL AIR INLET

(30) Priorité: 05.04.2017 FR 1752965
(43) Date de publication de la demande: 12.02.2020
(73) Titulaire: VALEO SYSTEMES THERMIQUES, 78322 Le Mesnil Saint-Denis Cedex (FR)
(72) Inventeur: YAHIA, Mohamed, 78322 Le Mesnil Saint-Denis Cedex (FR); GOUR, Josselin, 78322 Le Mesnil Saint Denis Cedex (FR)
(74) Mandataire: Tran, Chi-Hai
(86) Numéro de dépôt international: PCT/FR2018/050810
(87) Numéro de publication internationale: WO 2018/185414

(56) Documents cités:
- EP-A1- 3 606 778
- WO-A1-2011/037082
- WO-A1-2016/163771
- JP-A- 2002 225 545
- JP-A- 2011 068 296
- US-A- 5 309 731

## Description

Le domaine de la présente invention est celui des circuits de fluide réfrigérant pour une installation de chauffage, de ventilation et/ou de climatisation, notamment pour un habitacle d'un véhicule automobile. Elle a pour objet une installation de chauffage, de ventilation et/ou de climatisation comprenant au moins une arrivée d'air additionnelle.

Un véhicule automobile est couramment équipé d'un système de conditionnement d'air pour modifier une température d'un air contenu à l'intérieur d'un habitacle du véhicule automobile. Ce système comprend au moins un circuit dans lequel circule un fluide réfrigérant, capable de produire ou d'absorber de la chaleur. Pour ce faire, ce circuit comprend plusieurs échangeurs de chaleur permettant de réchauffer ou de refroidir l'air circulant dans l'habitacle, tout en asséchant cet air

Des exemples sont divulgués par : JP2011068296, US5309731, JP2002225545, WO2016163771 et WO2011037082.

L'efficacité de ce système peut être améliorée par la valorisation des calories présents dans l'air évacués de l'habitacle du véhicule. Ce système de revalorisation est cependant limité par la température de l'air extérieur introduit dans le système de conditionnement d'air. Un air extérieur dont la température est inférieure à -3°C empêche l'utilisation du système de revalorisation, l'air trop froid entrainant un risque de formation de buée sur les vitres de l'habitacle du véhicule.

Un but de la présente invention est de proposer un système de conditionnement d'air qui offre une solution satisfaisante au problème susvisé, en empêchant la formation de buée sur les vitres d'un habitacle du véhicule tout en permettant de valoriser les calories contenues dans l'air s'échappant de l'habitacle.

L'objet de la présente invention est un système de ventilation, chauffage et/ou climatisation selon la revendication 1. Le système de ventilation, chauffage et/ou climatisation comprend une installation de ventilation, chauffage et/ou climatisation comprenant au moins un boitier délimitant au moins une chambre de circulation d'un flux d'air, comprenant une première entrée agencée pour admettre dans le boitier un flux d'air extérieur et une deuxième entrée agencée pour admettre dans le boitier un flux d'air issu d'un habitacle du véhicule, au moins un premier échangeur de chaleur, un deuxième échangeur de chaleur et un troisième échangeur de chaleur chacun configuré pour réaliser un échange thermique entre le flux d'air et un fluide réfrigérant parcourant un circuit de fluide réfrigérant, le premier échangeur de chaleur, le deuxième échangeur de chaleur et le troisième échangeur de chaleur appartenant au même circuit de fluide réfrigérant, le boitier comprenant une première bouche d'admission agencée pour admettre dans le boitier un flux d'air extérieur et une deuxième bouche d'admission agencée pour admettre dans le boitier un flux d'air recyclé, la première bouche d'admission et la deuxième bouche d'admission étant agencées en aval du premier échangeur de chaleur, dans le sens d'écoulement du flux d'air.

L'installation de chauffage, de ventilation et/ou de climatisation ainsi agencée permet d'empêcher la formation de buée sur les vitres de l'habitacle, en permettant le traitement séparé d'un flux d'air issu de l'habitacle et d'un flux d'air issu de l'extérieur. Il est ainsi possible d'agir séparément sur les propriétés de chacun des flux, et ainsi de minimiser les risques de formation de buée.

L'installation de conditionnement d'air comprend avantageusement l'une quelconque au moins des caractéristiques suivantes prises seules ou en combinaison :
- la chambre de circulation définit un premier canal, un deuxième canal et une zone agencée pour alimenter en flux d'air le premier canal et le deuxième canal,
- la zone agencée pour alimenter en flux d'air le premier canal et le deuxième canal est agencée en amont du premier canal et du deuxième canal,
- le premier canal et le deuxième canal sont adjacents, c'est-à-dire qu'ils sont côte à côte et séparé par une paroi du boitier. Une paroi de séparation, agencée entre le premier canal et le deuxième canal, est disposée de façon à isoler le premier canal du deuxième canal,
- la première bouche d'admission et la deuxième bouche d'admission sont agencées dans le deuxième canal. La première bouche d'admission et la deuxième bouche d'admission sont agencées en amont du deuxième échangeur de chaleur,
- le deuxième échangeur de chaleur et le troisième échangeur de chaleur sont disposés dans le deuxième canal,
- le premier échangeur de chaleur est disposé dans la zone agencée pour alimenter en flux d'air le premier canal et le deuxième canal,
- le premier échangeur de chaleur est disposé avant le deuxième échangeur de chaleur, le troisième échangeur de chaleur est disposé après le deuxième échangeur de chaleur, selon le sens de circulation du flux d'air dans le boitier,
- l'installation de ventilation, chauffage et/ou climatisation comprend un moyen de contrôle de la circulation du flux d'air dans le deuxième canal qui provient de la zone agencée pour alimenter en flux d'air le premier canal et le deuxième canal,
- l'installation de ventilation, chauffage et/ou climatisation comprend un groupe moto-ventilateur disposé entre le premier échangeur de chaleur et le deuxième échangeur de chaleur. Le groupe moto-ventilateur est piloté pour permettre et faciliter la circulation d'un flux d'air dans le deuxième canal. Le groupe moto-ventilateur est agencé dans le deuxième canal. Alternativement, le groupe moto-ventilateur est agencé dans la zone agencée pour alimenter en flux d'air le premier canal et le deuxième canal,
- l'installation de ventilation, chauffage et/ou climatisation comprend un moyen de masquage du deuxième échangeur de chaleur à l'égard du flux d'air. Le moyen de masquage est agencé pour contrôler le passage du flux d'air au travers du deuxième échangeur de chaleur. Le moyen de masquage est avantageusement agencé pour empêcher le flux d'air de refroidir le fluide réfrigérant circulant dans le deuxième échangeur de chaleur. Le masquage du deuxième échangeur de chaleur permet ainsi d'accroitre la capacité du premier échangeur de chaleur à réchauffer le flux d'air le traversant. Plus particulièrement, le moyen de masquage est un volet mobile entre deux positions. Le moyen de masquage est mobile en rotation ou en translation. Préférentiellement, le moyen de masquage est mobile en rotation. Le moyen de masquage est choisi parmi un volet rotatif, un volet papillon et un volet film,
- le boitier comprend une chambre de mélange. La chambre de mélange est agencée pour collecter au moins un flux d'air provenant du premier canal et/ou au moins un flux d'air provenant du deuxième canal, avant que ces flux d'air ne soient dirigés vers l'habitacle du véhicule,
- le boitier comprend un radiateur électrique configuré pour fonctionner à haute tension. Le radiateur électrique est piloté pour générer un apport calorifique, dans une situation où le circuit de fluide réfrigérant et le circuit de liquide caloporteur ne permettent pas de réchauffer suffisamment le flux d'air pour répondre aux besoins des utilisateurs du véhicule. Le radiateur électrique est disposé dans une chambre de mélange. Le radiateur électrique occupe toute la largeur de la chambre de mélange, de sorte qu'un flux d'air passant par la chambre de mélange traverse obligatoirement le radiateur électrique. Alternativement, le radiateur électrique est disposé dans le premier canal ou le deuxième canal.

Selon l'invention le circuit de fluide réfrigérant, à l'intérieur duquel le fluide réfrigérant est apte à circuler, comprend le premier échangeur de chaleur, utilisé comme évaporateur, le deuxième échangeur de chaleur, utilisé comme sous-refroidisseur, le troisième échangeur de chaleur, utilisé comme condenseur, un quatrième échangeur de chaleur configuré pour réaliser un échange thermique entre le fluide réfrigérant et un liquide caloporteur, un premier organe de détente, disposé entre le premier échangeur de chaleur et le deuxième échangeur de chaleur sur le circuit de fluide réfrigérant, un deuxième organe de détente, disposé entre le troisième échangeur de chaleur et le quatrième échangeur de chaleur sur le circuit de fluide réfrigérant, et un compresseur, disposé entre le premier échangeur de chaleur et le troisième échangeur de chaleur sur le circuit de fluide réfrigérant.

Le système de ventilation chauffage et/ou climatisation selon l'invention comprend avantageusement l'une quelconque au moins des caractéristiques suivantes prises seules ou en combinaison :
- le compresseur est un compresseur électrique. Un compresseur électrique comprend un moteur électrique entrainant un dispositif de compression. Dans une variante de l'invention, le moteur électrique et le dispositif de compression sont agencés dans un boitier commun,
- le système comprend un circuit de liquide caloporteur, à l'intérieur duquel un liquide caloporteur est apte à circuler, comprenant au moins le quatrième échangeur de chaleur, une portion passant par une zone du véhicule dégageant des calories, et un radiateur,
- le quatrième échangeur de chaleur est un échangeur entre le fluide réfrigérant et le liquide caloporteur. Le quatrième échangeur de chaleur est agencé pour faire circuler le fluide réfrigérant dans un espace adjacent à un espace où circule le liquide caloporteur, afin de permettre un transfert de calories d'un fluide vers le liquide. Le quatrième échangeur de chaleur est agencé pour permettre la circulation du fluide réfrigérant de façon adjacente au sens de circulation du liquide caloporteur de façon à maximiser les échanges de chaleur entre les deux fluides. Le quatrième échangeur de chaleur peut être choisi parmi tout type d'échangeur, notamment un échangeur à tubes, un échangeur à faisceaux, un échangeur à spirales ou un échangeur à plaques,
- le système comprend un accumulateur disposé entre le premier échangeur de chaleur et le compresseur. L'accumulateur est agencé pour extraire du fluide réfrigérant la fraction du fluide réfrigérant à l'état liquide. L'extraction de la fraction du fluide réfrigérant à l'état liquide garantit que seul le fluide réfrigérant à l'état gazeux pénètre dans le compresseur, permettant de garantir l'intégrité du compresseur. L'accumulateur est également agencé pour remplir le rôle de réserve de fluide réfrigérant pour le circuit de fluide réfrigérant. Cette réserve est prévue pour gérer la masse circulante de fluide réfrigérant au sein du circuit de fluide réfrigérant.

L'invention a également trait à un véhicule équipé d'une installation de chauffage, de ventilation et/ou de climatisation tel que défini plus haut. Plus particulièrement, le véhicule comporte au moins une chaîne électrique de traction dont au moins un composant est traité thermiquement par le circuit de fluide caloporteur.

D'autres caractéristiques, détails et avantages de l'invention ressortiront plus clairement à la lecture de la description donnée ci-après à titre indicatif en relation avec des dessins dans lesquels
- la figure 1 est une illustration schématique d'un système de conditionnement d'air selon l'invention,
- la figure 2 est une illustration schématique d'un système de conditionnement d'air selon l'invention, le système étant configuré dans une première variante de fonctionnement,
- la figure 3 est une illustration schématique d'un système de conditionnement d'air selon l'invention, le système étant configuré dans une deuxième variante de fonctionnement,
- la figure 4 est une illustration schématique d'un système de conditionnement d'air selon l'invention, le système étant configuré dans une troisième variante de fonctionnement,
- la figure 5 est une illustration schématique d'un système de conditionnement d'air selon l'invention, le système étant configuré dans une quatrième variante de fonctionnement.

Il faut tout d'abord noter que les figures exposent l'invention de manière détaillée pour mettre en œuvre l'invention, lesdites figures pouvant bien entendu servir à mieux définir l'invention le cas échéant.

Dans la suite de la description, les termes amont et aval sont utilisés pour décrire la disposition d'un composant par rapport à la direction de circulation d'un fluide considéré. De même, l'agencement des éléments constitutifs d'un circuit d'un fluide est donné par rapport au sens de circulation de ce fluide dans le circuit.

Un élément décrit ci-après comme étant situé entre deux autres éléments ne signifie pas que l'élément est physiquement entre les deux autres, mais que le fluide passe d'abord par l'un des deux éléments, avant de passer par l'élément considéré.

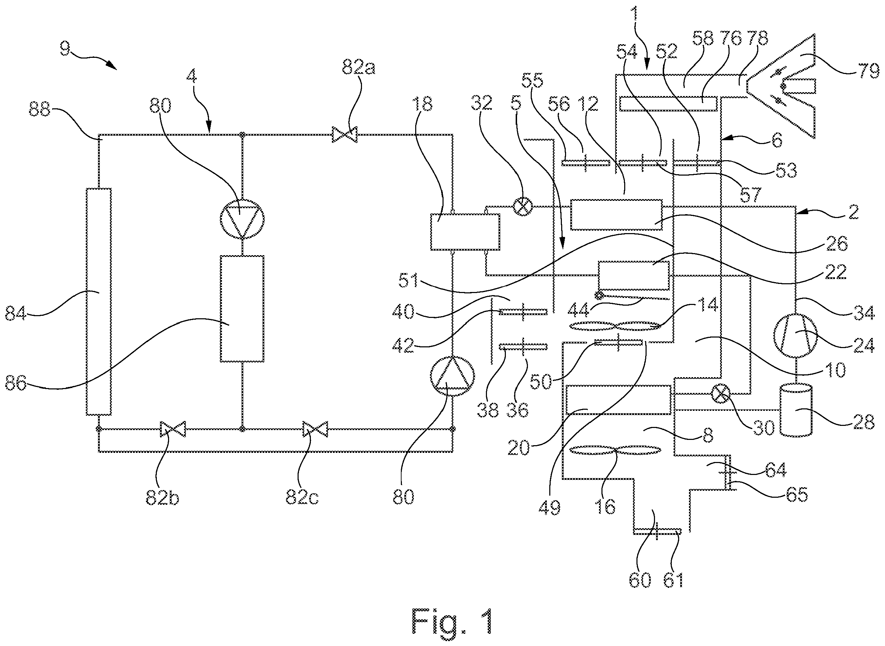

En se référant tout d'abord à la figure 1, on voit un exemple d'agencement du système de conditionnement d'air comportant une installation de ventilation, chauffage et/ou climatisation selon l'invention.

Le système de conditionnement d'air 9 représenté comprend un circuit de fluide réfrigérant 2 agencé pour la circulation d'un fluide réfrigérant, un circuit de liquide caloporteur 4 agencé pour la circulation d'un liquide caloporteur, et une installation de ventilation, chauffage et/ou climatisation 1.

L'installation de ventilation, chauffage et/ou climatisation 1 comprend un boitier 6, agencé pour la circulation d'un flux d'air, ainsi qu'un premier échangeur de chaleur 20, un deuxième échangeur de chaleur 22 et un troisième échangeur de chaleur 26, tous trois disposés dans le boitier 6.

Le circuit de fluide réfrigérant 2, agencé pour la circulation du fluide réfrigérant, comprend le premier échangeur de chaleur 20, le deuxième échangeur de chaleur 22, un compresseur 24, le troisième échangeur de chaleur 26, un quatrième échangeur de chaleur 18, un accumulateur 28, un premier organe de détente 30 et un deuxième organe de détente 32. Ces éléments sont reliés par des tubulures 34 rigides ou souples.

Le premier échangeur de chaleur 20 est un échangeur de chaleur entre le fluide réfrigérant et le flux d'air circulant dans le boitier 6. Le premier échangeur de chaleur 20 est disposé pour permettre la circulation du flux d'air et la circulation du fluide réfrigérant de façon adjacente, afin de permettre un échange de chaleur entre le fluide réfrigérant et le flux d'air. Plus particulièrement, le premier échangeur de chaleur 20 est utilisé en tant qu'évaporateur agencé pour refroidir et assécher le flux d'air passant dans le boitier 6. L'assèchement du flux d'air est le résultat de la condensation de l'eau contenue dans le flux d'air à la surface de l'évaporateur.

Le deuxième échangeur de chaleur 22 est un échangeur de chaleur entre le fluide réfrigérant et le flux d'air circulant dans le boitier 6. Le deuxième échangeur de chaleur 22 est disposé pour permettre la circulation du flux d'air et la circulation du fluide réfrigérant, de façon adjacente, afin de permettre un échange de chaleur entre le fluide réfrigérant et le flux d'air. Plus particulièrement, le deuxième échangeur de chaleur 22 est utilisé en tant que sous-refroidisseur agencé pour sous-refroidir le fluide réfrigérant le parcourant, ainsi que pour réchauffer le flux d'air le parcourant.

Le compresseur 24 équipant le circuit de fluide réfrigérant 2 est par exemple un compresseur électrique, agencé pour augmenter la pression du fluide réfrigérant, jusqu'à une pression d'environ 25 bars au maximum. Un tel compresseur électrique loge un mécanisme de compression à spirales, entrainé par un moteur électrique également disposé dans le compresseur électrique. Ce moteur électrique est commandé et alimenté électriquement par un module de commande configuré pour transformer le courant électrique continu provenant du véhicule en courant électrique alternatif adapté au moteur électrique.

Le troisième échangeur de chaleur 26 est un échangeur de chaleur entre le fluide réfrigérant et le flux d'air circulant dans le boitier 6. Le troisième échangeur de chaleur 26 est disposé pour permettre la circulation du flux d'air et la circulation du fluide réfrigérant, de façon adjacente, afin de permettre un échange de chaleur entre le fluide réfrigérant et le flux d'air. Plus particulièrement, le troisième échangeur de chaleur 26 est utilisé en tant que condenseur agencé pour chauffer le flux d'air passant dans le boitier 6.

Le quatrième échangeur de chaleur 18 est un échangeur de chaleur entre le fluide réfrigérant et le liquide caloporteur du circuit de liquide caloporteur 4. Le quatrième échangeur de chaleur 18 est disposé pour permettre la circulation du fluide réfrigérant et la circulation du liquide caloporteur de façon adjacente, afin de permettre un échange de chaleur entre le fluide réfrigérant et le liquide caloporteur. En fonction des situations, le fluide réfrigérant peut récupérer des calories du liquide caloporteur, ou au contraire lui en donner.

Le circuit de fluide réfrigérant 2 comprend un accumulateur 28, dit « bouteille asséchante », agencé pour retenir une fraction du fluide réfrigérant à l'état liquide, pour empêcher la détérioration du compresseur 24 par du fluide à l'état liquide.

Le circuit de fluide réfrigérant 2 comprend également un premier organe de détente 30 et un deuxième organe de détente 32. Ces organes de détente 30, 32 sont pilotés, par exemple électroniquement, pour faire passer le fluide réfrigérant d'une première pression à une deuxième pression plus basse que la première pression. Le premier organe de détente 30 est disposé entre le premier échangeur de chaleur 20 et le deuxième échangeur de chaleur 22, le deuxième organe de détente 32 étant disposé entre le troisième échangeur de chaleur 26 et le quatrième échangeur de chaleur 18.

Le fluide réfrigérant est un fluide réfrigérant ou un mélange de fluide réfrigérant, de la famille des hydrochlorofluorocarbures (HCFC), ou des hydrofluorocarbures (HFC). Le fluide réfrigérant peut notamment être du R134a ou du 1234YF. Le fluide réfrigérant peut également être le dioxyde de carbone connu sous l'acronyme R744.

Le boitier 6, définit une chambre de circulation 5 agencée pour la circulation du flux d'air vers un habitacle (non représenté) d'un véhicule (non représenté). La chambre de circulation 5 comprend un premier canal 10 et un deuxième canal 12, et une zone 8 agencée pour alimenter en flux d'air le premier canal 10 et le deuxième canal 12. Le boitier 6 comprend une paroi de séparation 51 et un moyen de contrôle 50 de la circulation du flux d'air dans le deuxième canal 50 en provenance de la zone 8.

La zone 8 comprend une première entrée 60 agencée pour admettre dans le boitier 6 un flux d'air recyclé, c'est-à-dire un flux d'air issu de l'habitacle du véhicule. L'air recyclé est acheminé depuis l'habitacle du véhicule par un circuit de récupération d'air (non représenté).

La première entrée 60 comprend un premier volet d'admission 61. Le premier volet d'admission 61 prend la forme d'un volet mobile en rotation autour d'un axe central, agencé dans une ouverture de la première entrée 60. Le volet mobile disposé dans l'ouverture interdit ou autorise le passage du flux d'air issu de l'habitacle du véhicule à l'intérieur du boitier 6.

La zone 8 comprend également une deuxième entrée 64 agencée pour admettre dans le boitier 6 un flux d'air extérieur. L'air extérieur est acheminé depuis l'extérieur de l'habitacle du véhicule par une grille d'aération qui débouche sur le boitier 6.

La deuxième entrée 64 comprend un deuxième volet d'admission 65. Le deuxième volet d'admission 65 prend la forme d'un volet mobile en rotation autour d'un axe central, agencé dans une ouverture de la deuxième entrée 64. Le volet mobile disposé dans l'ouverture interdit ou autorise le passage d'un flux d'air issu de l'extérieur de l'habitacle du véhicule à l'intérieur du boitier 6.

Bien qu'il ne soit pas représenté sur les figures, on comprendra que la deuxième entrée 64 peut comprendre un filtre à air agencé pour empêcher les particules indésirables de pénétrer dans l'habitacle. Le filtre à air peut être du type d'un filtre à pollen, d'un filtre à charbons actifs ou encore d'un filtre au polyphénol.

L'ouverture et la fermeture du premier volet d'admission 61 et/ou du deuxième volet d'admission 65 permet de sélectionner l'origine de l'air qui circulera dans la zone 8 et dans le premier canal 10 et/ou le deuxième canal 12. Cette sélection est opérée par une unité de contrôle de la température en fonction des préférences d'un utilisateur du véhicule. Ainsi, si le premier volet d'admission 61 est fermé et que le deuxième volet d'admission 65 est ouvert, seul de l'air extérieur circulera dans la zone 8. Si le premier volet d'admission 61 et le deuxième volet d'admission 65 sont ouverts, l'air qui circule dans la zone 8 et dans le premier canal 10 et/ou le deuxième canal 12 se composera pour moitié d'air issu de l'extérieur et pour moitié d'air issu de l'habitacle.

La zone 8 loge au moins un groupe moto-ventilateur 16, dit premier groupe moto-ventilateur 16. Le premier groupe moto-ventilateur 16 est agencé pour envoyer l'air à travers le premier échangeur de chaleur 20 et vers le premier canal 10 et/ou le deuxième canal 12. Le premier groupe moto-ventilateur 16 est du type d'un groupe moto-ventilateur axial.

La zone 8 comprend le premier échangeur de chaleur 20. Le premier échangeur de chaleur 20 s'étend dans la zone 8 de sorte le flux d'air venant de la première entrée 60 et/ou de la deuxième entrée 64 passent obligatoirement au travers du premier échangeur de chaleur 20.

Le premier canal 10 comprend un premier passage 52 vers une chambre de mélange 58. La chambre de mélange 58 est commune au premier canal 10 et au deuxième canal 12, en ce sens que le premier canal 10 et au moins une partie du deuxième canal 12 débouchent dans la chambre de mélange. La chambre de mélange 58 communique avec une sortie d'air 78 en direction de l'habitacle. Au sein de la chambre de mélange 58, les flux d'air provenant du premier canal 10 et du deuxième canal 12 sont mélangés. Les flux d'air pouvant avoir des caractéristiques thermiques et/ou aérauliques similaires ou différentes, la chambre de mélange 58 permet de mélanger les flux de façon à répondre aux souhaits des utilisateurs du véhicule.

Selon un exemple de l'invention, le premier passage 52 est un conduit seul, c'est-à-dire qu'il est dépourvu d'échangeur de chaleur, quel que soit le type d'échangeur de chaleur considéré.

Le premier passage 52 comprend un volet de fermeture 53. Le volet de fermeture 53 prend la forme d'un volet mobile en rotation autour d'un axe central, agencé dans une ouverture du premier passage 52 vers l'habitacle du véhicule. Le volet mobile disposé dans l'ouverture interdit ou autorise le passage d'un flux d'air issu de l'intérieur du premier canal 10 vers l'habitacle du véhicule.

La paroi de séparation 51 est agencée entre le premier canal 10 et le deuxième canal 12. Cette paroi de séparation 51 est agencée de manière à séparer le flux d'air passant par le premier canal 10 du flux d'air passant par le deuxième canal 12.

Le moyen de contrôle 50 du deuxième canal 12 est disposé entre la zone 8 et une entrée du deuxième canal 12. Le moyen de contrôle 50 prend la forme d'un volet mobile en rotation autour d'un axe central, agencé dans un orifice 49 disposé entre la zone 8 et le deuxième canal 12. Le volet mobile disposé dans l'orifice 49 interdit ou autorise le passage d'un flux d'air de la zone 8 au deuxième canal 12.

Le deuxième canal 12 comprend une première bouche d'admission 40 agencée pour admettre dans le deuxième canal 12 un flux d'air extérieur. L'air extérieur est acheminé depuis l'extérieur du véhicule par une grille d'aération qui débouche dans le deuxième canal 12.

Bien qu'il ne soit pas représenté sur les figures, on comprendra que la première bouche d'admission 40 peut comprendre un filtre à air agencé pour empêcher les particules indésirables de pénétrer dans l'habitacle. Le filtre à air peut être du type d'un filtre à pollen, d'un filtre à charbons actifs ou encore d'un filtre au polyphénol.

La première bouche d'admission 40 comprend un premier clapet d'admission 42. Le premier clapet d'admission 42 prend la forme d'un volet mobile en rotation autour d'un axe central, agencé dans une ouverture de la première bouche d'admission 40. Le volet mobile disposé dans l'ouverture interdit ou autorise le passage d'un flux d'air issu de l'extérieur du véhicule à l'intérieur du deuxième canal 12.

Le deuxième canal 12 comprend une deuxième bouche d'admission 36 agencée pour admettre dans le deuxième canal 12 un flux d'air recyclé. L'air recyclé est acheminé depuis l'habitacle du véhicule par un circuit de récupération d'air (non représenté) vers le deuxième canal 12.

La deuxième bouche d'admission 36 comprend un deuxième clapet d'admission 38. Le deuxième clapet d'admission 38 prend la forme d'un volet mobile en rotation autour d'un axe central, agencé dans une ouverture de la deuxième bouche d'admission 36. Le volet mobile disposé dans l'ouverture interdit ou autorise le passage d'un flux d'air issu de l'extérieur du véhicule à l'intérieur du deuxième canal 12.

La partie du deuxième canal 12 où sont agencées la première bouche d'admission 40 et la deuxième bouche d'admission 36 est disposé en parallèle par rapport à la zone 8, du point de vue de la circulation d'un flux d'air. Plus particulièrement, un flux d'air entre et circule dans le boitier 6 et passe soit par la zone 8, soit par la partie du deuxième canal 12 où sont agencées la première bouche d'admission 40 et la deuxième bouche d'admission 36

L'ouverture et la fermeture du premier clapet d'admission 42 et/ou du deuxième clapet d'admission 38 permet de sélectionner la nature de l'air qui entre dans le deuxième canal 12, en plus de l'admission du flux d'air en provenance de la zone 8. Cette sélection est opérée par l'unité de contrôle de la température en fonction des préférences d'un utilisateur du véhicule. Ainsi, dans le cas où le moyen de contrôle 50 sépare le premier canal 10 du deuxième canal 12, si le deuxième clapet d'admission 38 est fermé et que le premier clapet d'admission 42 est ouvert, seul de l'air extérieur circulera dans le deuxième canal 12. Toujours dans le cas où le moyen de contrôle 50 sépare le premier canal 10 du deuxième canal 12, si le premier clapet d'admission 42 et le deuxième clapet d'admission 38 sont ouverts, l'air qui circule dans le deuxième canal 12 se composera pour moitié d'air issu de l'extérieur et pour moitié d'air issu de l'habitacle. Dans le cas où le moyen de contrôle 50 autorise le passage d'un flux d'air de la zone 8 dans le deuxième canal 12, la nature du flux d'air traversant le deuxième canal 12 est affecté par la nature du flux d'air en provenance de la zone 8.

Ainsi agencé, le deuxième canal 12 peut admettre deux admissions, une traitée thermiquement via la zone 8 et le premier échangeur de chaleur 20, et une autre non traitée thermiquement et agencée pour permettre la sélection d'un air extérieur et/ou d'un air recyclé circulant dans le deuxième canal 12.

Le deuxième canal 12 comprend un groupe moto-ventilateur 14, dit second groupe moto-ventilateur 14. Le second groupe moto-ventilateur 14 est agencé pour envoyer l'air vers le deuxième canal 12. Le second groupe moto-ventilateur 14 est du type d'un groupe moto-ventilateur axial. Le second groupe moto-ventilateur 14 est agencé en parallèle de la première bouche d'admission 40 et de la deuxième bouche d'admission 36, dans le sens du flux d'air s'écoulant dans le deuxième canal 12.

Le deuxième canal 12 comprend le deuxième échangeur de chaleur 22. Le deuxième échangeur de chaleur 22 est agencé en aval du second groupe moto-ventilateur 14, c'est-à-dire après le second groupe moto-ventilateur 14.

Le deuxième canal 12 comprend un moyen de masquage 44 du deuxième échangeur de chaleur 22. Le moyen de masquage 44 est agencé entre le second groupe moto-ventilateur 14 et le deuxième échangeur de chaleur 22. Le moyen de masquage 44 est un volet monté rotatif autour d'un axe, mobile entre une première position permettant le passage de l'air au travers du deuxième échangeur de chaleur 22, et une seconde position empêchant le passage de ce même air au travers du premier échangeur de chaleur 20. La rotation du moyen de masquage 44 est contrôlée par l'unité de contrôle de la température dans l'habitacle du véhicule, en fonction des préférences des utilisateurs, principalement la température demandée par le ou les utilisateurs du véhicule, et des conditions climatiques, notamment la température extérieure, qui se traduisent en un mode de fonctionnement particulier du système de conditionnement du flux d'air selon l'invention. Le moyen de masquage 44 est agencé pour détourner un flux d'air du deuxième échangeur de chaleur 22, empêchant un transfert de calories de l'un vers l'autre.

Le deuxième canal 12 comprend le troisième échangeur de chaleur 26. Le troisième échangeur de chaleur est agencé en aval du deuxième échangeur de chaleur 22.

Le deuxième canal 12 comprend un conduit 56 qui dirige au moins une partie du flux d'air circulant dans le deuxième canal 12 vers l'extérieur de l'habitacle. Ce conduit 56 est agencé en aval du troisième échangeur de chaleur 26. Le conduit 56 communique avec l'extérieur du véhicule.

Le conduit 56 vers l'extérieur comprend un premier volet d'obturation 55. Le premier volet d'obturation 55 prend la forme d'un volet mobile en rotation autour d'un axe central, agencé dans une ouverture du conduit 56 vers l'extérieur du véhicule. Le volet mobile disposé dans l'ouverture interdit ou autorise le passage d'un flux d'air issu de l'intérieur du boitier 6 vers l'extérieur du véhicule. Le conduit 56 est agencé pour évacuer au moins une partie de l'air circulant dans le deuxième canal 12 lorsque le premier volet d'obturation 55 est ouvert.

Le deuxième canal 12 comprend un deuxième passage 54 vers la chambre de mélange 58. Ce deuxième passage 54 est agencé en aval du troisième échangeur de chaleur 26.

Le deuxième passage 54 comprend un deuxième volet d'obturation 57. Le deuxième volet d'obturation 57 prend la forme d'un volet mobile en rotation autour d'un axe central, agencé dans une ouverture du deuxième passage 54 vers l'habitacle du véhicule. Le volet mobile disposé dans l'ouverture interdit ou autorise le passage d'un flux d'air issu de l'intérieur du boitier 6 vers l'habitacle du véhicule.

Le boitier 6 comprend un radiateur électrique 76 configuré pour fonctionner sous une haute tension, c'est-à-dire un radiateur électrique qui a une organisation qui le rend adapté à fonctionner sous une haute tension. Par haute tension, on entend une tension supérieure à environ 300V. Ce radiateur électrique 76 est disposé dans la chambre de mélange 58. Le radiateur électrique 76 s'étend dans la chambre de mélange 58 de sorte que le flux d'air parcourant la chambre de mélange 58 passe obligatoirement au travers du radiateur électrique 76.

Le radiateur électrique 76 est piloté par l'unité de contrôle de la température de l'habitacle du véhicule, et est activable sélectivement pour assurer un apport supplémentaire de chaleur au flux d'air traversant le radiateur électrique 76.

Le boitier 6 comprend également la sortie d'air 78 en direction de l'habitacle. La sortie d'air 78 communique avec un dispositif de distribution 79 permettant de diriger le flux d'air en des zones dédiées de l'habitacle en fonction des préférences d'un utilisateur.

Le circuit de liquide caloporteur 4, agencé pour la circulation du liquide caloporteur, comprend le quatrième échangeur de chaleur 18, au moins une ou plusieurs pompes 80, une pluralité de valves 82, un radiateur 84 et une portion 86 agencée pour passer au travers ou à proximité d'une zone du véhicule dégageant de la chaleur. Ces éléments sont reliés par des tubulures 88.

Le liquide caloporteur passe par le quatrième échangeur de chaleur 18. Comme décrit plus haut, le quatrième échangeur de chaleur 18 est un échangeur entre le fluide réfrigérant et le liquide caloporteur.

Le circuit de liquide caloporteur 4 comprend le radiateur 84 dont la température du corps du radiateur est d'au maximum environ 65°C. Ce radiateur 84 fonctionne comme un échangeur de chaleur entre le liquide caloporteur et un air qui peut être l'air extérieur au véhicule.

Le circuit de liquide caloporteur 4 comprend une portion 86 agencée pour passer au travers ou à proximité d'une zone du véhicule dégageant de la chaleur. Dans le cas d'un véhicule thermique, cette zone comprend le moteur à combustion interne du véhicule. Dans le cas d'un véhicule électrique, cette zone comprend un élément d'une chaine de traction électrique du véhicule, par exemple le moteur électrique de propulsion du véhicule et/ou les composants de puissance alimentant ledit moteur appelés par exemple module d'électronique de puissance. Dans le cas d'un véhicule hybride thermique/électrique, cette zone comprend au moins un élément parmi le moteur à combustion interne et/ou la chaine de traction électrique.

Le circuit de liquide caloporteur 4 comprend également une ou plusieurs pompes 80 pour faire circuler le liquide caloporteur au travers du circuit de liquide caloporteur 4. Dans la variante décrite ici, le circuit comprend deux pompes 80, l'une agencée en aval du quatrième échangeur de chaleur 18, une autre agencée en amont de la portion 86. Seule une des deux pompes 80 est active à un instant donné. La pompe 80 agencée en amont de la portion 86 est active quand le liquide caloporteur passe par la portion 86, et est notamment agencée pour permettre le refroidissement de la zone du véhicule dégageant de la chaleur. La pompe 80 agencée en aval du quatrième échangeur de chaleur 18 est active quand le liquide caloporteur passe par le radiateur 84, et est notamment agencée pour permettre les échanges thermiques entre le liquide caloporteur et l'air extérieur au véhicule.

Les deux pompes 80 peuvent être actives simultanément, si le besoin de refroidir la zone du véhicule dégageant de la chaleur et de permettre les échanges thermiques entre le liquide caloporteur et l'air extérieur au véhicule se faisait sentir.

Le circuit de liquide caloporteur 4 comprend également une pluralité de valves 82, agencées pour moduler le trajet du liquide caloporteur. Dans la variante décrite ici, le circuit de liquide caloporteur comprend trois valves 82 permettant de diriger sélectivement le liquide caloporteur vers le radiateur 84 ou la portion 86. Le circuit de liquide caloporteur comprend ainsi une première valve 82a, une deuxième valve 82b et une troisième valve 82c. La première valve 82a est disposée entre le quatrième échangeur de chaleur 18, le radiateur 84 et la portion 86. La deuxième valve 82b est disposée entre le radiateur 84 et la portion 86. La troisième valve 82c est disposée entre la portion 86 et la deuxième valve 82b.

Le liquide caloporteur est un liquide caloporteur, et notamment de l'eau, un mélange de glycol et d'eau, de l'eau déionisée ou un fluide diélectrique tel des hydrocarbures fluorés.

Le système précédemment décrit est utilisé pour moduler la température à l'intérieur de l'habitacle. Le système fonctionne selon au moins quatre modes principaux, en fonction des conditions climatiques, du fonctionnement du véhicule et des préférences thermiques et aérauliques des utilisateurs du véhicule. Le système est notamment utilisé pour abaisser la température de l'air présent dans l'habitacle, le fonctionnement du système étant différent en fonction de la différence de température entre le flux d'air présent dans l'habitacle et l'air extérieur au véhicule, augmenter la température de l'air présent dans l'habitacle, le fonctionnement du système étant différent en fonction de la charge du moteur.

Un exemple de configuration du système va être décrit ci-après pour chacun des quatre modes. Ces exemples de configuration ne constituent qu'une possibilité de configuration du système, des éléments du système pouvant être agencés autrement, dans une autre position ou dans un ordre différent, des éléments supplémentaires pouvant également être incorporés au système.

Dans les paragraphes suivants, la circulation des différents fluides le long du circuit de fluide réfrigérant 2 et du circuit de liquide caloporteur 4 est décrite depuis un point de départ jusqu'à un point final. La sélection du point de départ et du point final est arbitraire, les circuits fonctionnant en boucle fermée et n'ont donc pas de point de départ spécifique. A contrario, le sens de circulation de chacun des fluides est décrit.

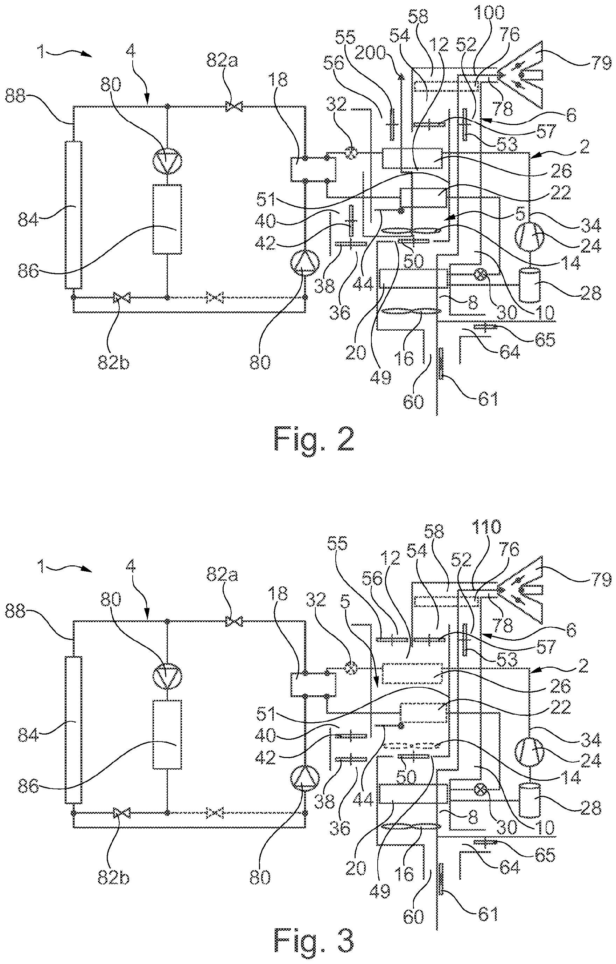

Si un utilisateur souhaite abaisser la température du flux d'air dans l'habitacle, lorsque la différence entre la température souhaitée dans l'habitacle et la température de l'air à l'intérieur de l'habitacle dépasse les 8°C, le système selon l'invention est opéré de la façon illustrée à la figure 2. Le mode décrit ici correspond à un mode climatisation avec une forte charge thermique, c'est-à-dire une forte demande de refroidissement de l'habitacle.

Au niveau du boitier 6, le moyen de contrôle 50 du deuxième canal 12 est fermé, la zone 8 communique uniquement avec le premier canal 10. Le deuxième canal 12 forme un espace séparé de la zone 8 et du premier canal 10, c'est-à-dire qu'un flux d'air circulant dans la zone 8 et le premier canal 10 est distinct d'un flux d'air circulant dans le deuxième canal 12. Un premier flux d'air 100 parcourt la zone 8, le premier canal 10 et la chambre de mélange 58 avant d'être envoyé vers l'habitacle par la sortie d'air 78. Le premier flux d'air 100 est issu de la première entrée 60 et de la deuxième entrée 64, le premier volet d'admission 61 et le deuxième volet d'admission 65 étant ouverts. Le premier flux d'air 100 passe par le premier groupe moto-ventilateur 16 puis par le premier échangeur de chaleur 20, où il transfère des calories au fluide réfrigérant parcourant le premier échangeur de chaleur 20. Ce transfert de chaleur s'accompagne d'une condensation de l'humidité contenue dans le premier flux d'air 100 sur la surface du premier échangeur de chaleur 20. Le premier flux d'air 100 passe ensuite par le premier passage 52 vers la chambre de mélange 58, le volet de fermeture 53 étant ouvert. Le premier flux d'air est envoyé dans l'habitacle via la sortie 78 et le dispositif de distribution 79.

Un deuxième flux d'air 200, issu exclusivement de l'extérieur du véhicule, entre dans le deuxième canal 12 par la première bouche d'admission 40, le premier clapet d'admission 42 étant ouvert. La deuxième bouche d'admission 36 est obstrué par le deuxième clapet d'admission 38. Le deuxième flux d'air est envoyé vers l'extérieur par le conduit 56 vers l'extérieur, le premier volet d'obturation 55 étant ouvert. Le deuxième volet d'obturation 57 est fermé, c'est-à-dire qu'il interdit le passage du deuxième flux d'air 200 dans la chambre de mélange 58. Dans le deuxième canal 12, le deuxième flux d'air 200 passe successivement par le deuxième échangeur de chaleur 22 et par le troisième échangeur de chaleur 26, où le deuxième flux d'air 200 récupère des calories diffusées par le fluide réfrigérant. Le moyen de masquage 44 du deuxième échangeur de chaleur 22 est disposé de façon à forcer le passage du deuxième flux d'air 200 à travers le deuxième échangeur de chaleur 22. Le fluide réfrigérant est donc condensé par le passage du deuxième flux d'air 200 au travers du troisième échangeur de chaleur 26.

Dans le circuit de fluide réfrigérant 2, le fluide réfrigérant à l'état gazeux est compressé par le compresseur 24 et passe d'une basse pression, par exemple 3 bars, à une pression plus élevée, par exemple 17 bars. Le fluide réfrigérant s'écoule ensuite dans le troisième échangeur de chaleur 26 où il dissipe des calories dans le deuxième flux d'air 200 parcourant le deuxième canal 12. Après son passage dans le troisième échangeur de chaleur 26, le fluide réfrigérant est dans un état diphasique liquide/gazeux. Le fluide réfrigérant parcourt ensuite le circuit jusqu'au deuxième organe de détente 32. L'organe de détente 32 est ouvert et n'agit pas sur la pression à laquelle circule le fluide réfrigérant. Le fluide réfrigérant atteint ensuite le quatrième échangeur de chaleur 18, et transmet des calories au liquide caloporteur qui traverse le quatrième échangeur de chaleur 18. Après son écoulement dans le quatrième échangeur de chaleur 18, le fluide réfrigérant est à l'état liquide. Le fluide réfrigérant passe par le deuxième échangeur de chaleur 22 où il dissipe des calories dans le deuxième flux d'air 200 parcourant le deuxième canal 12, avant de passer par le premier organe de détente 30 où il subit une détente le ramenant à une basse pression, par exemple 3 bars. Le fluide réfrigérant passe ensuite par le premier échangeur de chaleur 20, où il va absorber des calories issues du premier flux d'air 100 destiné à être envoyé dans l'habitacle du véhicule, ce qui a pour effet de diminuer la température à l'intérieur de l'habitacle. A la sortie du premier échangeur de chaleur 20, le fluide réfrigérant est dans un état diphasique liquide/gazeux. Le fluide réfrigérant passe ensuite par un accumulateur 28 qui sépare la phase liquide de la phase gazeuse du fluide réfrigérant. La phase gazeuse passe ensuite par le compresseur 24 et recommence le circuit.

Dans le circuit de liquide caloporteur 4, le liquide caloporteur traverse le quatrième échangeur de chaleur 18 où il absorbe des calories provenant du fluide réfrigérant. Le liquide caloporteur passe par la première valve 82a, avant d'être dirigé vers le radiateur 84, où il dissipe ces calories dans l'air extérieur traversant le radiateur 84, et la portion 86 où il refroidit une zone du véhicule. La deuxième valve 82b étant ouverte et la troisième valve 82c fermée, le liquide caloporteur venant du radiateur 84 rejoint le liquide caloporteur venant de la portion 86, avant d'être de nouveau dirigé vers le quatrième échangeur de chaleur 18.

Ainsi agencé, le système permet de diminuer la température de l'air dans l'habitacle du véhicule.

Si un utilisateur souhaite abaisser la température du flux d'air dans l'habitacle, lorsque la différence entre la température souhaitée dans l'habitacle et la température de l'air à l'intérieur de l'habitacle est inférieure à 8°C, le système selon l'invention est opéré de la façon illustrée à la figure 3. Le mode décrit ici correspond à un mode climatisation avec une faible charge thermique, c'est-à-dire une demande de refroidissement peu importante de l'habitacle.

Au niveau du boitier 6, le premier clapet d'admission 42, le deuxième clapet d'admission 38, le premier volet d'obturation 55 et le deuxième volet d'obturation 57 sont placés en position fermée. Le deuxième canal 12 est ainsi fermé, la circulation d'un flux d'air étant interdite dans le deuxième canal 12. Le second groupe moto-ventilateur 14 est placé en position arrêt. Il n'y a pas de transfert de calories entre l'air présent dans le deuxième canal 12 et le deuxième échangeur de chaleur 22 d'une part et l'air présent dans le deuxième canal 12 et le troisième échangeur de chaleur 26 d'autre part. Le boitier est agencé ainsi car le gain énergétique potentiel de l'utilisation du deuxième échangeur de chaleur 22 et du troisième échangeur de chaleur 26 ne compense pas la consommation énergétique du second groupe moto-ventilateur 14. Il est donc plus efficace de bloquer la circulation de l'air dans le deuxième canal 12.

Un troisième flux d'air 110 parcourt néanmoins la zone 8 et le premier canal 10 avant d'être envoyé vers l'habitacle par la sortie d'air 78. Le troisième flux d'air 110 est issu de la première entrée 60 et de la deuxième entrée 64, le premier volet d'admission 61 et le deuxième volet d'admission 65 étant ouverts. Ce troisième flux d'air 110 passe par le premier groupe moto-ventilateur 16 puis par le premier échangeur de chaleur 20, où il transfère des calories au fluide réfrigérant parcourant le premier échangeur de chaleur 20. Ce transfert de calories s'accompagne d'une condensation de l'humidité contenue dans le troisième flux d'air 110 sur la surface du premier échangeur de chaleur 20. Le troisième flux d'air 110 passe ensuite par le premier passage 52 vers la chambre de mélange 58, le volet de fermeture 53 étant ouvert. Le premier flux d'air est envoyé dans l'habitacle via la sortie 78 et le dispositif de distribution 79.

Dans le circuit de fluide réfrigérant 2, le fluide réfrigérant à l'état gazeux est compressé par le compresseur 24 et passe d'une basse pression, par exemple 3 bars, à une pression plus élevée, par exemple 17 bars. Le fluide réfrigérant s'écoule ensuite dans le troisième échangeur de chaleur 26 sans dissiper de chaleur, en raison de l'absence de circulation d'un flux d'air dans le deuxième canal 12. Le fluide réfrigérant suit ensuite le circuit et passe par le deuxième organe de détente 32. Le deuxième organe de détente 32 est ouvert, c'est-à-dire qu'il n'influe pas sur la pression du fluide réfrigérant. Le fluide réfrigérant est ensuite dirigé jusqu'au quatrième échangeur de chaleur 18, et transmet des calories au liquide caloporteur qui traverse le quatrième échangeur de chaleur 18. Après son écoulement dans le quatrième échangeur de chaleur 18, le fluide réfrigérant est dans un état diphasique liquide/gazeux ou dans un état totalement liquide en fonction des échanges qui ont eu lieu dans le quatrième échangeur de chaleur 18. Le fluide réfrigérant passe par le deuxième échangeur de chaleur 22 où il n'y a aucun échange avec l'air du deuxième canal 12. Le fluide réfrigérant passe ensuite par le premier organe de détente 30 où il subit une détente le ramenant à une basse pression, par exemple 3 bars. Le fluide réfrigérant passe ensuite par le premier échangeur de chaleur 20, où il va absorber des calories issues du troisième flux d'air 110 destiné à être envoyé dans l'habitacle du véhicule, ce qui a pour effet de diminuer la température à l'intérieur de l'habitacle. Le fluide réfrigérant passe ensuite par un accumulateur 28 qui sépare la phase liquide de la phase gazeuse du fluide réfrigérant. La phase gazeuse passe ensuite par le compresseur 24 et recommence le circuit.

Dans le circuit de liquide caloporteur 4, le liquide caloporteur traverse le quatrième échangeur de chaleur 18 où il récupère des calories provenant du fluide réfrigérant. Le liquide caloporteur passe par la première valve 82a, avant d'être dirigé vers le radiateur 84, où il dissipe ces calories dans l'air extérieur traversant le radiateur 84, et la portion 86 où il refroidit une zone du véhicule. La deuxième valve 82b étant ouverte et la troisième valve 82c fermée, le liquide caloporteur venant du radiateur 84 rejoint le liquide caloporteur venant de la portion 86, avant d'être de nouveau dirigé vers le quatrième échangeur de chaleur 18.

Ainsi agencé, le système permet de diminuer la température de l'air dans l'habitacle du véhicule.

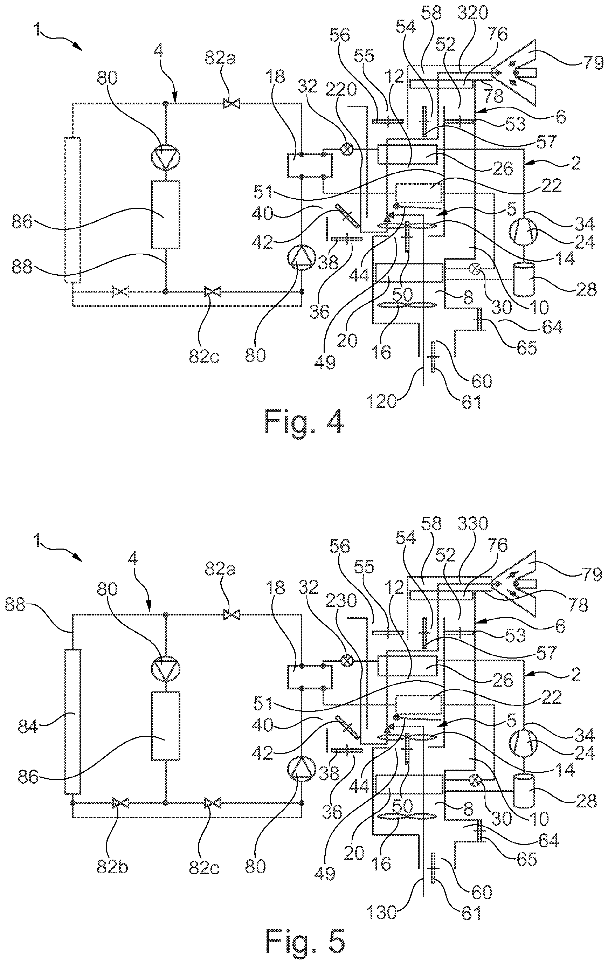

Si un utilisateur souhaite augmenter la température du flux d'air dans l'habitacle alors que la charge moteur est faible, le système selon l'invention est opéré de la façon illustrée à la figure 4. Le mode décrit ici correspond à un mode pompe à chaleur avec une faible charge moteur, c'est-à-dire une situation où le moteur du véhicule dégage peu de chaleur.

Au niveau du boitier 6, le volet de fermeture 53 est fermé et le moyen de contrôle 50 est ouvert. Un quatrième flux d'air 120, issu de l'habitacle, s'écoule depuis la première entrée 60, passe par le premier groupe moto-ventilateur 16 puis par le premier échangeur de chaleur 20 avant d'être envoyé dans le deuxième canal 12. Le quatrième flux d'air 120, au moment de son passage dans le premier échangeur de chaleur 20 transfère de la chaleur au fluide réfrigérant parcourant le premier échangeur de chaleur 20. Ce transfert de chaleur s'accompagne d'une condensation de l'humidité contenue dans le quatrième flux d'air 120 sur la surface du premier échangeur de chaleur 20. Un cinquième flux d'air 220, issu de l'extérieur, s'écoule depuis la première bouche d'admission 40 dans le deuxième canal 12, le premier clapet d'admission 42 étant ouvert. Le deuxième clapet d'admission 38 est fermé. Le quatrième flux d'air 120 et le cinquième flux d'air 220 se mélange dans le deuxième canal 12 pour former un premier flux d'air commun 320. Ce premier flux d'air commun 320 est détourné du deuxième échangeur de chaleur 22 par le moyen de masquage 44 et passe ensuite par le troisième échangeur de chaleur 26 où le fluide réfrigérant réchauffe le premier flux d'air commun 320, avant de passer par le deuxième passage 54, le deuxième volet d'obturation 57 étant ouvert. Le deuxième flux commun 330 est forcé de sortir par le deuxième passage 54, le conduit 56 étant obstrué par le premier volet d'obturation 55. Le premier flux d'air commun 20 traverse et est réchauffé par le radiateur électrique 76, avant d'être dirigé vers l'habitacle par la sortie d'air 78.

Dans le circuit de fluide réfrigérant 2, le fluide réfrigérant est compressé par le compresseur 24 et passe d'une basse pression, par exemple 3 bars, à une pression plus élevée, par exemple 17 bars. Le fluide réfrigérant s'écoule ensuite dans le troisième échangeur de chaleur 26 où il diffuse des calories au premier flux d'air commun 320 parcourant le deuxième canal 12. Le fluide réfrigérant passe ensuite par le deuxième organe de détente 32 où il subit une détente et revient à une pression plus basse. Le fluide réfrigérant parcourt ensuite le quatrième échangeur de chaleur 18 où il absorbe des calories venant du liquide caloporteur. Le fluide réfrigérant passe ensuite par le deuxième échangeur de chaleur 22 rendu inactif par le moyen de masquage 44. Le fluide réfrigérant passe ensuite par le premier échangeur de chaleur 20, où il récupère des calories provenant du quatrième flux d'air 120. Le fluide réfrigérant passe ensuite par un accumulateur 28 qui sépare la phase liquide de la phase gazeuse du fluide réfrigérant. La phase gazeuse passe ensuite par le compresseur 24 et recommence le circuit.

Dans le circuit de liquide caloporteur 4, le liquide caloporteur traverse la portion 86 où il absorbe des calories. La deuxième valve 82b étant fermée et la troisième valve 82c ouverte, le liquide caloporteur passe ensuite par le quatrième échangeur de chaleur 18 où il restitue ces calories au fluide réfrigérant traversant le quatrième échangeur de chaleur 18. Après son passage dans le quatrième échangeur de chaleur 18 le liquide caloporteur passe par le première valve 82a ouverte pour de nouveau être dirigé vers la portion 86.

Ainsi agencé, le système permet d'augmenter la température de l'air dans l'habitacle du véhicule. Additionnellement, le système permet de refroidir un élément du moteur ayant une température importante, tel que la chaine de traction électrique pour un véhicule électrique ou hybride électrique / essence.

Si un utilisateur souhaite augmenter la température du flux d'air dans l'habitacle alors que la charge moteur est élevée, le système selon l'invention est opéré de la façon illustrée à la figure 5. Le mode décrit ici correspond à un mode pompe à chaleur avec une forte charge moteur, c'est-à-dire une situation où le moteur du véhicule dégage une importante quantité de chaleur.

Au niveau du boitier 6, le volet de fermeture 53 est fermé et le moyen de contrôle 50 est ouvert. Un sixième flux d'air 130, issu de l'habitacle, s'écoule depuis la deuxième entrée 60, passe par le premier groupe moto-ventilateur 16 puis par le premier échangeur de chaleur 20 avant d'être envoyé dans le deuxième canal 12. Le sixième flux d'air 130, au moment de son passage dans le premier échangeur de chaleur 20, transfère des calories au fluide réfrigérant parcourant le premier échangeur de chaleur 20. Ce transfert de calories s'accompagne d'une condensation de l'humidité contenue dans le sixième flux d'air 130 sur la surface du premier échangeur de chaleur 20. Un septième flux d'air 230, issu de l'extérieur, s'écoule depuis la première bouche d'admission 40 dans le deuxième canal 12, le premier clapet d'admission 42 étant ouvert. Le deuxième clapet d'admission 38 est fermé. Le sixième flux d'air 130 et le septième flux d'air 230 se mélange dans le deuxième canal 12 pour former un deuxième flux d'air commun 330. Ce deuxième flux d'air commun 330 est détourné du deuxième échangeur de chaleur 22 par le moyen de masquage 44 et passe par le troisième échangeur de chaleur 26 où le fluide réfrigérant réchauffe le deuxième flux d'air commun 330, avant de passer par le deuxième passage 54, le deuxième volet d'obturation 57 étant ouvert. Le deuxième flux commun 330 est forcé de sortir par le deuxième passage 54, le conduit 56 étant obstrué par le premier volet d'obturation 55. Le deuxième flux d'air commun 330 traverse et est réchauffé par le radiateur électrique 76, avant d'être dirigé vers l'habitacle par la sortie d'air 78.

Dans le circuit de fluide réfrigérant 2, le fluide réfrigérant est compressé par le compresseur 24 et passe d'une basse pression, par exemple 3 bars, à une pression plus élevée, par exemple 17 bars. Le fluide réfrigérant s'écoule ensuite dans le troisième échangeur de chaleur 26 où il transfère des calories au deuxième flux d'air commun 330 parcourant le deuxième canal 12. Le fluide réfrigérant passe ensuite par le deuxième organe de détente 32 où il subit une détente et revient à une pression intermédiaire. Le fluide réfrigérant parcourt ensuite le quatrième échangeur de chaleur 18 où il récupère des calories venant du liquide caloporteur. Le fluide réfrigérant passe ensuite par le deuxième échangeur de chaleur 22 rendu inactif par le moyen de masquage 44. Le fluide réfrigérant est ensuite à nouveau détendu par le premier organe de détente 30 pour atteindre une basse pression. Le fluide réfrigérant passe ensuite par le premier échangeur de chaleur 20, où il absorbe des calories provenant du sixième flux d'air 130. Le fluide réfrigérant passe ensuite par un accumulateur 28 qui sépare la phase liquide de la phase gazeuse du fluide réfrigérant. La phase gazeuse passe ensuite par le compresseur 24 et recommence le circuit.

Dans le circuit de liquide caloporteur 4, la première valve 82a, la deuxième valve 82b et la troisième valve 82c sont ouvertes. Une partie du liquide caloporteur circulant traverse la portion 86 où il récupère des calories, une autre partie du liquide caloporteur circulant traversant le radiateur 84 où il transfère des calories à l'air ambiant. Le liquide caloporteur passe ensuite par le quatrième échangeur de chaleur 18 où il restitue ces calories au fluide réfrigérant traversant le quatrième échangeur de chaleur 18, avant d'être de nouveau dirigé vers la portion 86.

Ainsi agencé, le système permet d'augmenter la température de l'air dans l'habitacle du véhicule. Additionnellement, le système permet de refroidir un élément du moteur ayant une température importante, tel que la chaine de traction électrique pour un véhicule électrique ou hybride électrique / essence.

Le premier volet d'admission 61 est représenté ouvert sur toutes les figures. On comprendra néanmoins que le premier volet d'admission 61 peut être fermé. C'est notamment le cas lorsque la température de l'air au sein de l'habitacle est supérieure à la température de l'air extérieur au véhicule et supérieure à une valeur donnée. Cette valeur correspond à une température élevée, par exemple 30°C, comme on peut le rencontrer en été notamment.

Le deuxième clapet d'admission 38 est représenté fermé sur toutes les figures. On comprendra néanmoins que le deuxième clapet d'admission 38 peut être ouvert. C'est notamment le cas lorsque la température de l'air au sein de l'habitacle est supérieure à la température de l'air extérieur au véhicule et que le second groupe moto-ventilateur 14 est actionné.

La description qui précède explique clairement comment l'invention permet d'atteindre les objectifs qu'elle s'est fixé et notamment de proposer une installation de ventilation, chauffage et/ou climatisation permettant d'empêcher le givrage de l'évaporateur.

Bien entendu, diverses modifications peuvent être apportées par l'homme du métier au dispositif d'aide à la circulation qui vient d'être décrite à titre d'exemple non limitatif, dès lors que l'on met en œuvre un boitier comprenant une première bouche d'admission et une deuxième bouche d'admission agencées en aval d'un premier échangeur de chaleur.

## Revendications

1. Système de ventilation, chauffage et/ou climatisation (9) comprenant une installation de ventilation, chauffage et/ou climatisation (1) comprenant au moins :
- un boitier (6) délimitant au moins une chambre de circulation (5) d'un flux d'air, comprenant une première entrée (60) agencée pour admettre dans le boitier (6) un flux d'air extérieur et une deuxième entrée (64) agencée pour admettre dans le boitier (6) un flux d'air issu d'un habitacle du véhicule,
- au moins un premier échangeur de chaleur (20), un deuxième échangeur de chaleur (22) et un troisième échangeur de chaleur (26) chacun configuré pour réaliser un échange thermique entre le flux d'air et un fluide réfrigérant parcourant un circuit de fluide réfrigérant, le boitier (6) comprenant une première bouche d'admission (40) agencée pour admettre dans le boitier (6) un flux d'air extérieur et une deuxième bouche d'admission (36) agencée pour admettre dans le boitier (6) un flux d'air recyclé, la première bouche d'admission (40) et la deuxième bouche d'admission (36) étant agencées en aval du premier échangeur de chaleur (20), dans le sens d'écoulement du flux d'air
**caractérisée en ce que**,
le premier échangeur de chaleur (20), le deuxième échangeur de chaleur (22) et le troisième échangeur de chaleur (26) appartiennent au même circuit de fluide réfrigérant,
et **en ce que** le système (9) comprend un circuit de fluide réfrigérant (2), à l'intérieur duquel le fluide réfrigérant est apte à circuler, comprenant :
- le premier échangeur de chaleur (20), utilisé comme évaporateur,
- le deuxième échangeur de chaleur (22), utilisé comme sous-refroidisseur,
- le troisième échangeur de chaleur (26), utilisé comme condenseur,
- un quatrième échangeur de chaleur (18) configuré pour réaliser un échange thermique entre le fluide réfrigérant et un liquide caloporteur,
- un premier organe de détente (30), disposé entre le premier échangeur de chaleur (20) et le deuxième échangeur de chaleur (22) sur le circuit de fluide réfrigérant (2),
- un deuxième organe de détente (32), disposé entre le troisième échangeur de chaleur (26) et le quatrième échangeur de chaleur (18) sur le circuit de fluide réfrigérant (2), et
un compresseur (24), disposé entre le premier échangeur de chaleur (20) et le troisième échangeur de chaleur (26) sur le circuit de fluide réfrigérant (2).

2. Système de ventilation, chauffage et/ou climatisation (9) selon la revendication précédente, dans laquelle la chambre de circulation (5) définit un premier canal (10), un deuxième canal (12) et une zone (8) agencée pour alimenter en flux d'air le premier canal (10) et le deuxième canal (12).

3. Système de ventilation, chauffage et/ou climatisation (9) selon la revendication précédente, dans laquelle le premier canal (10) et le deuxième canal (12) sont adjacents.

4. Système de ventilation, chauffage et/ou climatisation (9) selon l'une quelconque des revendications 2 ou 3, dans laquelle la première bouche d'admission (40) et la deuxième bouche d'admission (36) sont agencées dans le deuxième canal (12).

5. Système de ventilation, chauffage et/ou climatisation (9) selon l'une quelconque des revendications 2 à 4, dans laquelle le deuxième échangeur de chaleur (22) et le troisième échangeur de chaleur (26) sont disposés dans le deuxième canal (12).

6. Système de ventilation, chauffage et/ou climatisation (9) selon l'une quelconque des revendications 2 à 5, l'installation de ventilation et/ou climatisation (1) comprenant un moyen de contrôle (50) de la circulation du flux d'air dans le deuxième canal (12) en provenance de la zone (8) agencée pour alimenter en flux d'air le premier canal (10) et le deuxième canal (12).

7. Système de ventilation, chauffage et/ou climatisation (9) selon l'une quelconque des revendications précédentes, l'installation de ventilation et/ou climatisation (1) comprenant un groupe moto-ventilateur (16) disposé entre le premier échangeur de chaleur (20) et le deuxième échangeur de chaleur (22).

8. Système de ventilation, chauffage et/ou climatisation (9) selon l'une quelconque des revendications précédentes, l'installation de ventilation et/ou climatisation (1) comprenant un moyen de masquage (44) du deuxième échangeur de chaleur (22) à l'égard du flux d'air.

9. Système de ventilation, chauffage et/ou climatisation (9) selon l'une quelconque des revendications précédentes, dans laquelle le compresseur (24) est un compresseur électrique.

10. Système de ventilation, chauffage et/ou climatisation (9) selon l'une quelconque des revendications précédentes, comprenant un circuit de liquide caloporteur (4), à l'intérieur duquel un liquide caloporteur est apte à circuler, comprenant :
- le quatrième échangeur de chaleur (18),
- une portion (86) passant par une zone du véhicule dégageant des calories, et
- un radiateur (76).

11. Véhicule **caractérisé en ce qu'**il comprend un système de ventilation, chauffage et/ou climatisation (9) selon l'une quelconque des revendications précédentes.

12. Véhicule selon la revendication précédente, comprenant au moins une chaîne électrique de traction dont au moins un composant est traité thermiquement par le circuit de liquide caloporteur (4).

## Patentansprüche

1. Lüftungs-, Heizungs- und/oder Klimatisierungssystem (9) mit einer Lüftungs-, Heizungs- und/oder Klimatisierungsanlage (1), umfassend zumindest:
- ein Gehäuse (6), das zumindest eine Luftstromzirkulationskammer (5) begrenzt und einen ersten Einlass (60), der so angeordnet ist, dass er einen Außenluftstrom in das Gehäuse (6) einlässt, und einen zweiten Einlass (64), der so angeordnet ist, dass er einen aus einem Insassenraum des Fahrzeugs stammenden Luftstrom in das Gehäuse (6) einlässt, umfasst,
- zumindest einen ersten Wärmeaustauscher (20), einen zweiten Wärmeaustauscher (22) und einen dritten Wärmeaustauscher (26), die jeweils so konfiguriert sind, dass sie einen Wärmeaustausch zwischen dem Luftstrom und einem in einem Kühlfluidkreislauf fließenden Kühlfluid durchführen,
wobei das Gehäuse (6) eine erste Einlassöffnung (40), die so angeordnet ist, dass sie einen Außenluftstrom in das Gehäuse (6) einlässt, und eine zweite Einlassöffnung (36), die so angeordnet ist, dass sie einen Umluftstrom in das Gehäuse (6) einlässt, umfasst, wobei die erste Einlassöffnung (40) und die zweite Einlassöffnung (36) in der Strömungsrichtung des Luftstroms stromabwärts des ersten Wärmeaustauschers (20) angeordnet sind,
**dadurch gekennzeichnet, dass** der erste Wärmeaustauscher (20), der zweite Wärmeaustauscher (22) und der dritte Wärmeaustauscher (26) zu demselben Kühlfluidkreislauf gehören und
dass das System (9) einen Kühlfluidkreislauf (2) umfasst, in dem das Kühlfluid zirkulieren kann, umfassend:
- den ersten Wärmeaustauscher (20), der als Verdampfer verwendet wird,
- den zweiten Wärmeaustauscher (22), der als Unterkühler verwendet wird,
- den dritten Wärmeaustauscher (26), der als Kondensator verwendet wird,
- einen vierten Wärmeaustauscher (18), der so konfiguriert ist, dass er einen Wärmeaustausch zwischen dem Kühlfluid und einer Wärmeübertragungsflüssigkeit durchführt,
- ein erstes Entspannungsorgan (30), das zwischen dem ersten Wärmeaustauscher (20) und dem zweiten Wärmeaustauscher (22) am Kühlfluidkreislauf (2) angeordnet ist,
- ein zweites Entspannungsorgan (32), das zwischen dem dritten Wärmeaustauscher (26) und dem vierten Wärmeaustauscher (18) am Kühlfluidkreislauf (2) angeordnet ist, und
- einen Verdichter (24), der zwischen dem ersten Wärmeaustauscher (20) und dem dritten Wärmeaustauscher (26) am Kühlfluidkreislauf (2) angeordnet ist.

2. Lüftungs-, Heizungs- und/oder Klimatisierungssystem (9) nach dem vorangehenden Anspruch, wobei die Zirkulationskammer (5) einen ersten Kanal (10), einen zweiten Kanal (12) und einen Bereich (8) definiert, der angeordnet ist, um dem ersten Kanal (10) und dem zweiten Kanal (12) einen Luftstrom zuzuführen.

3. Lüftungs-, Heizungs- und/oder Klimatisierungssystem (9) nach dem vorangehenden Anspruch, wobei der erste Kanal (10) und der zweite Kanal (12) benachbart sind.

4. Lüftungs-, Heizungs- und/oder Klimatisierungssystem (9) nach einem der Ansprüche 2 oder 3, wobei die erste Einlassöffnung (40) und die zweite Einlassöffnung (36) im zweiten Kanal (12) angeordnet sind.

5. Lüftungs-, Heizungs- und/oder Klimatisierungssystem (9) nach einem der Ansprüche 2 bis 4, wobei der zweite Wärmeaustauscher (22) und der dritte Wärmeaustauscher (26) im zweiten Kanal (12) angeordnet sind.

6. Lüftungs-, Heizungs- und/oder Klimatisierungssystem (9) nach einem der Ansprüche 2 bis 5, wobei die Lüftungs- und/oder Klimatisierungsanlage (1) ein Mittel (50) zum Steuern der Zirkulation des Luftstroms im zweiten Kanal (12) aus dem Bereich (8) umfasst, der angeordnet ist, um dem ersten Kanal (10) und dem zweiten Kanal (12) einen Luftstrom zuzuführen.

7. Lüftungs-, Heizungs- und/oder Klimatisierungssystem (9) nach einem der vorangehenden Ansprüche, wobei die Lüftungs- und/oder Klimatisierungsanlage (1) einen Lüftersatz (16) umfasst, der zwischen dem ersten Wärmeaustauscher (20) und dem zweiten Wärmeaustauscher (22) angeordnet ist.

8. Lüftungs-, Heizungs- und/oder Klimatisierungssystem (9) nach einem der vorangehenden Ansprüche, wobei die Lüftungs- und/oder Klimatisierungsanlage (1) ein Mittel (44) zum Abdecken des zweiten Wärmeaustauschers (22) gegenüber dem Luftstrom umfasst.

9. Lüftungs-, Heizungs- und/oder Klimatisierungssystem (9) nach einem der vorangehenden Ansprüche, wobei der Verdichter (24) ein elektrischer Verdichter ist.

10. Lüftungs-, Heizungs- und/oder Klimatisierungssystem (9) nach einem der vorangehenden Ansprüche, umfassend einen Wärmeübertragungsflüssigkeitskreislauf (4), in dem eine Wärmeübertragungsflüssigkeit zirkulieren kann, umfassend:
- den vierten Wärmeaustauscher (18),
- einen Abschnitt (86), der durch einen Bereich des Fahrzeugs verläuft, der Kalorien abgibt, und
- einen Radiator (76).

11. Fahrzeug, **dadurch gekennzeichnet, dass** es ein Lüftungs-, Heizungs- und/oder Klimatisierungssystem (9) nach einem der vorangehenden Ansprüche umfasst.

12. Fahrzeug nach dem vorangehenden Anspruch, umfassend zumindest einen elektrischen Antriebsstrang, von dem zumindest eine Komponente durch den Wärmeübertragungsflüssigkeitskreislauf (4) wärmebehandelt wird.

## Claims

1. Ventilation, heating and/or air-conditioning system (9) comprising a ventilation, heating and/or air-conditioning installation (1) comprising at least:
- a housing (6) delimiting at least one circulation chamber (5) for an air stream, comprising a first inlet (60) arranged to admit into the housing (6) an outside air stream and a second inlet (64) arranged to admit into the housing (6) an air stream from an interior of the vehicle,
- at least one first heat exchanger (20), one second heat exchanger (22) and one third heat exchanger (26) each configured to produce a heat exchange between the air stream and a refrigerant running through a refrigerant circuit, the housing (6) comprising a first supply inlet (40) arranged to admit into the housing (6) an outside air stream and a second supply inlet (36) arranged to admit into the housing (6) a recycled air stream, the first supply inlet (40) and the second supply inlet (36) being arranged downstream of the first heat exchanger (20), in the direction of flow of the air stream,
**characterized in that**,
the first heat exchanger (20), the second heat exchanger (22) and the third heat exchanger (26) belong to the same refrigerant circuit,
and **in that** the system (9) comprises a refrigerant circuit (2), inside which the refrigerant can circulate, comprising:
- the first heat exchanger (20), used as evaporator,
- the second heat exchanger (22), used as subcooler,
- the third heat exchanger (26), used as condenser,
- a fourth heat exchanger (18) configured to produce a heat exchange between the refrigerant and a heat-transfer liquid,
- a first expansion member (30), disposed between the first heat exchanger (20) and the second heat exchanger (22) on the refrigerant circuit (2),
- a second expansion member (32), disposed between the third heat exchanger (26) and the fourth heat exchanger (18) on the refrigerant circuit (2), and
a compressor (24), disposed between the first heat exchanger (20) and the third heat exchanger (26) on the refrigerant circuit (2).

2. Ventilation, heating and/or air-conditioning system (9) according to the preceding claim, wherein the circulation chamber (5) defines a first channel (10), a second channel (12) and a zone (8) arranged to supply air stream to the first channel (10) and the second channel (12).

3. Ventilation, heating and/or air-conditioning system (9) according to the preceding claim, wherein the first channel (10) and the second channel (12) are adjacent.

4. Ventilation, heating and/or air-conditioning system (9) according to either one of Claims 2 and 3, wherein the first supply inlet (40) and the second supply inlet (36) are arranged in the second channel (12) .

5. Ventilation, heating and/or air-conditioning system (9) according to any one of Claims 2 to 4, wherein the second heat exchanger (22) and the third heat exchanger (26) are disposed in the second channel (12) .

6. Ventilation, heating and/or air-conditioning system (9) according to any one of Claims 2 to 5, the ventilation and/or air-conditioning installation (1) comprising a control means (50) for controlling the circulation of the air stream in the second channel (12) from the zone (8) arranged to supply air stream to the first channel (10) and the second channel (12).

7. Ventilation, heating and/or air-conditioning system (9) according to any one of the preceding claims, the ventilation and/or air-conditioning installation (1) comprising a motor-driven fan (16) disposed between the first heat exchanger (20) and the second heat exchanger (22).

8. Ventilation, heating and/or air-conditioning system (9) according to any one of the preceding claims, the ventilation and/or air-conditioning installation (1) comprising a masking means (44) for masking the second heat exchanger (22) from the air stream.

9. Ventilation, heating and/or air-conditioning system (9) according to any one of the preceding claims, wherein the compressor (24) is an electrical compressor.

10. Ventilation, heating and/or air-conditioning system (9) according to any one of the preceding claims, comprising a heat-transfer liquid circuit (4), inside which a heat-transfer liquid can circulate, comprising:
- the fourth heat exchanger (18),
- a portion (86) passing through a zone of the vehicle giving off calories, and
- a radiator (76).

11. Vehicle, **characterized in that** it comprises a ventilation, heating and/or air-conditioning system (9) according to any one of the preceding claims.

12. Vehicle according to the preceding claim, comprising at least one electric powertrain of which at least one component is heat-treated by the heat-transfer liquid circuit (4).
